# FASCICULE DE BREVET EUROPEEN

(11) **EP 0 964 209 B1**
(45) Date de publication et mention de la délivrance du brevet: **16.04.2003**
(21) Numéro de dépôt: 99401131.0
(22) Date de dépôt: 07.05.1999
(51) Int. Cl.: F24F 3/14

(54) **Enceinte à dessiccateur**
Trocknergehäuse
Desiccant housing

(30) Priorité: 15.05.1998 FR 9806178
(43) Date de publication de la demande: 15.12.1999
(73) Titulaire: THALES AVIONICS S.A., 78141 Vélizy Villacoublay Cédex (FR)
(72) Inventeur: Guiragossian, Nicolas, Prés. S. Allende, 94117 Arcueil Cedex (FR)
(74) Mandataire: Beylot, Jacques

(56) Documents cités:
- EP-A- 0 365 066
- WO-A-93/05867
- US-A- 5 230 719

## Description

La présente invention concerne la déshumidification d'une enceinte en communication avec un environnement extérieur à pression variable en vue de la maintenir en dessous d'un certain seuil de point de rosée, pour éviter dans les conditions d'utilisation normales, l'apparition de cristaux ou de condensation. Il est en effet important dans certaines enceintes en communication avec l'environnement extérieur à pression variable, notamment celles renfermant des systèmes optiques de projection, d'éviter l'apparition de cristaux ou de vapeur de condensation pouvant perturber la propagation des rayonnements lumineux.

Pour ce faire, il est connu de monter, sur l'orifice de mise en communication d'une enceinte avec l'environnement extérieur, un dessiccateur constitué d'une antichambre ouverte sur l'environnement extérieur et remplie de granulés dessiccants. Ainsi, l'air que l'enceinte emprunte à l'environnement extérieur par suite des variations de pression est asséché avant de parvenir en son sein.

Dans la pratique, on se heurte à divers inconvénients et notamment au fait qu'il faut monter le dessiccateur une première fois sur l'orifice de l'enceinte et le remplacer de temps à autre pour régénérer ses granulés et, qu'à ces occasions, l'enceinte est en communication directe par son ouverture avec l'environnement extérieur ce qui oblige à chaque fois à la purger par un rinçage à l'aide d'un gaz sec.

Il s'avère en outre que les granulés dessiccants sont mal utilisés lorsqu'ils sont simplement entassés dans une antichambre placée devant l'ouverture d'une enceinte à assécher car la circulation d'air suit des chemins préférentiels entraînant une saturation inhomogène en humidité des granulés obligeant à régénérer les granulés bien avant qu'ils soient tous saturés d'humidité. Du document EP-A-365 066 on connaît un dessiccateur qui renferme des parois internes empêchant l'air de suivre un cheminement direct.

La présente invention a pour but de lutter contre les inconvénients précités afin d'obtenir une enceinte à dessiccateur d'un entretien simple et peu contraignant.

Elle a pour objet une enceinte à dessiccateur comportant une enceinte propre en communication avec l'environnement extérieur par un orifice équipé d'une antichambre amovible remplie de granulés dessiccants. Cette enceinte à dessiccateur est remarquable en ce qu'elle comporte entre l'orifice de l'enceinte propre et l'antichambre amovible remplie de granulés dessiccants, une valve fermée au repos et ouverte par la mise en place sur l'orifice de l'enceinte propre, de l'antichambre remplie de granulés dessiccants et en ce que l'antichambre remplie de granulés dessiccants renferme une chicane empêchant l'air de suivre un cheminement direct et l'obligeant à rencontrer la majorité des granulés dessiccants.

Avantageusement, l'antichambre remplie de granulés dessiccants comporte aux deux extrémités de sa chicane des filtres maintenant les granulés dessiccants dans la chicane et évitant la propagation de poussières issues de l'érosion des granulés.

Avantageusement, l'antichambre remplie de granulés dessiccants comporte à l'extrémité de sa chicane tournée vers l'orifice la mettant en communication avec l'enceinte propre, un clapet simple effet à l'admission dans l'enceinte s'ouvrant en phase de compression du volume intérieur de l'enceinte propre et un clapet simple effet au refoulement hors de l'enceinte s'ouvrant en phase de décompression du volume intérieur de l'enceinte propre et mettant l'enceinte directement en communication avec l'environnement extérieur par l'intermédiaire d'un évent en parallèle sur la chicane.

Avantageusement, la chicane de l'antichambre remplie de granulés dessiccants est convergente avec une section droite allant en se restreignant en direction de l'orifice de l'enceinte.

Avantageusement, l'antichambre remplie de granulés dessiccants renferme une chicane convergente et un clapet simple effet au refoulement hors de l'enceinte s'ouvrant en phase de décompression de l'enceinte et mettant l'enceinte directement en communication avec l'environnement extérieur par l'intermédiaire d'un évent en parallèle sur la chicane.

Avantageusement, l'antichambre remplie de granulés dessiccants est pourvue de moyens de contrôle de la saturation en humidité des granulés dessiccants.

Avantageusement, l'antichambre remplie de granulés dessiccants est pourvue de moyens visuels de contrôle de la saturation en humidité des granulés dessiccants consistant en une fenêtre laissant voir les granulés dessiccants placés à l'extrémité de la chicane tournée vers l'orifice de l'enceinte.

Avantageusement, l'antichambre remplie de granulés dessiccants est pourvue de moyens électroniques de contrôle de la saturation en humidité des granulés dessiccants avec deux électrodes de mesure venant au contact des granulés dessiccants placés à l'extrémité de la chicane tournée vers l'orifice de l'enceinte.

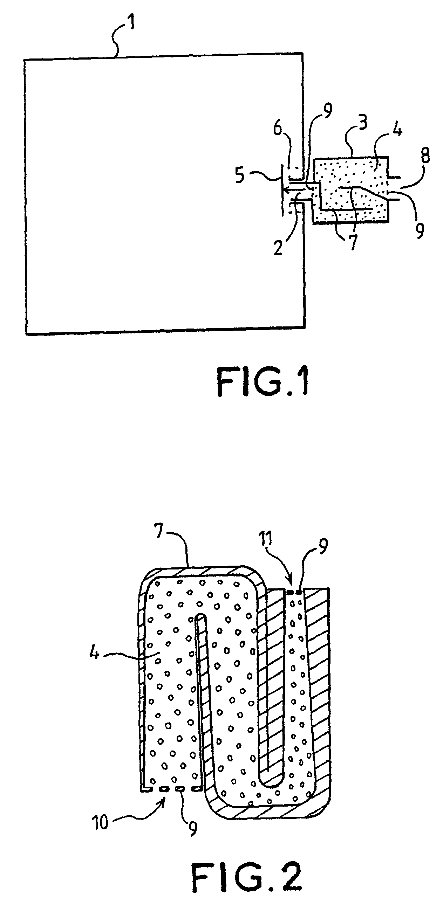

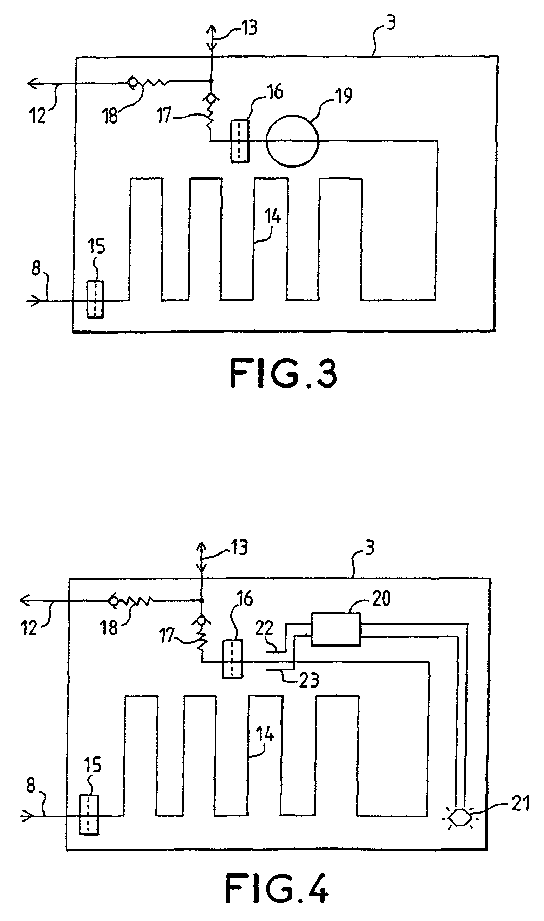

D'autres caractéristiques et avantages de l'invention ressortiront de la description ci-après d'un mode de réalisation donné à titre d'exemple. Cette description sera faite en regard du dessin dans lequel :
- une figure 1 est une représentation schématique en coupe d'une enceinte à dessiccateur selon l'invention,
- une figure 2 est une vue en coupe d'une chicane convergente remplie de granulées dessiccants, utilisée pour canaliser l'air introduit dans l'enceinte, et
- des figures 3 et 4 sont des vues schématiques de différentes variantes d'une antichambre qui est accolée à l'orifice faisant communiquer le volume intérieur d'une enceinte à dessiccateur selon l'invention, avec l'environnement extérieur, qui sert de réceptacle à des granulés dessiccants et qui est pourvue de moyens de contrôle de l'état de saturation des granulés dessiccants et de moyens de contrôle de la circulation d'air au travers de l'orifice.

On distingue sur la figure 1 une enceinte propre 1 en communication avec l'environnement extérieur par un orifice 2 afin d'éviter un différentiel de pression entre son volume intérieur et l'environnement extérieur susceptible de la faire imploser ou exploser. Cette enceinte propre 1 est susceptible d'échanger un flux d'air avec l'environnement extérieur sous l'effet des variations de pression de cet environnement extérieur. Pour empêcher que cette échange de flux d'air n'entraîne une contamination du volume intérieur de l'enceinte propre 1 par de l'air humide susceptible d'abaisser le seuil de point de rosée à partir duquel la vapeur d'eau se condense et éviter les perturbations telles que les cristaux ou la condensation sur le chemin d'un faisceau optique parcourant le volume intérieur de l'enceinte propre 1, il faut procéder à une déshumidification du flux d'air entrant. Cela s'obtient de manière connue en faisant traverser à ce flux d'air une antichambre 3 dans laquelle il est mis au contact de granulés dessiccants 4 tels que des granulés connus sous la marque déposée silicagel qui virent du bleu clair au rose pale lorsqu'ils se chargent en humidité.

Les granulés dessiccants 4 remplissant l'antichambre 3 du dessiccateur doivent être régénérés lors qu'ils sont saturés en humidité afin de rétablir leur pouvoir d'absorption de l'humidité. Cela oblige à un démontage périodique de l'antichambre 3. Pour éviter que le volume intérieur de l'enceinte propre 1 ne puisse être contaminé par de l'air humide lors des démontages de l'antichambre 3 du dessiccateur, l'orifice 2 de l'enceinte propre 1 est équipé d'une valve 5 fermée au repos et ouverte par l'accouplement de l'antichambre 3 sur l'orifice 2, l'antichambre 3 étant par exemple équipée d'une buse aux dimensions intérieures de l'orifice 2 dont le nez vient repousser la valve 5 en position ouverte alors qu'elle est rappelée en position fermée par un ressort 6.

L'antichambre 3 est équipée, au droit de ses ouvertures 8 sur l'environnement extérieur et sur l'orifice 2 de l'enceinte propre 1, de filtres 9 ayant pour rôle de maintenir en son sein les granulés dessiccants 4 et aussi d'arrêter les poussières dues à l'érosion des granulés dessiccants.

L'antichambre 3 qui renferme les granulés dessiccants 4 a son volume intérieur agencé par un cloisonnement 7 en une chicane qui mène d'une ouverture 8 sur l'environnement extérieur à l'orifice 2 de l'enceinte propre 1. Cette chicane a l'intérêt d'allonger le trajet de l'air au sein de l'antichambre 3 afin de lui faire rencontrer un maximum de granulés dessiccants. Sans elle, l'air suivrait des chemins préférentiels ce qui aboutirait à une saturation rapide en humidité des granulés dessiccants sur ces chemins et à une saturation en humidité quasi-nulle des granulés dessiccants en dehors de ces chemins obligeant à régénérer le dessiccateur bien avant que tous ses granulés ne soient saturés en humidité.

La figure 2 montre en coupe la forme préférentielle d'une chicane. Celle-ci est convergente. Sa section droite va en diminuant depuis une embouchure large 10 sur l'environnement extérieur jusqu'à un débouché 11 étroit sur l'orifice 2 de l'enceinte 1. En régime subsonique, ce qui est toujours le cas en pratique, la vitesse d'écoulement d'un fluide s'accélère le long d'un canal de forme convergente. Ainsi la vitesse de l'air de recompression en direction du volume intérieur de l'enceinte propre 1 augmente le long de la chicane, ce qui est bénéfique car l'aptitude à piéger les molécules d'eau des granulés dessiccants croit avec la vitesse de l'air qui les effleure.

Les figures 3 et 4 illustrent, de manière schématique, différentes constitutions possibles pour l'antichambre 3 renfermant les granulés dessiccants 4.

Dans la figure 3, l'antichambre 3 renfermant les granulés dessiccants comporte deux ouvertures 8 et 12 sur l'environnement extérieur et une ouverture 13 d'accès à l'orifice 2 de l'enceinte propre 1. La première ouverture 8 sur l'environnement extérieur est un orifice d'admission d'air. Elle mène, par l'intermédiaire d'une chicane 14 remplie de granulés dessiccants et fermée à ses extrémités par des filtres 15, 16, et par l'intermédiaire d'un clapet simple effet à l'admission 17, à l'ouverture 13 d'accès à l'orifice 2 de l'enceinte propre 1. La deuxième ouverture 12 sur l'environnement extérieur est un évent de refoulement d'air qui shunte la chicane 14, et qui est relié par un clapet simple effet au refoulement 18 à l'orifice 2 de l'enceinte propre 1. En plus de ces éléments, l'antichambre 3 est pourvue d'un hublot 19 permettant de voir les granulés dessiccants situés à la sortie de la chicane 14, du côté de l'ouverture 13 donnant accès à l'orifice 2 de l'enceinte propre 1. Ce hublot 19 permet de contrôler par leur changement de couleur, l'état de saturation en humidité des granulés dessiccants qui sont les derniers à se saturer en humidité puisque situés en extrémité de la chicane.

La figure 4 se distingue de la figure 3 par le fait que le hublot de contrôle visuel de l'état de saturation en humidité des granulés dessiccants a été remplacé par un humidimètre électronique 20 avec un voyant à diode électroluminescente 21 et deux électrodes de mesure 22, 23 disposées au voisinage des granulés dessiccants situés à la sortie de la chicane 14, du côté de l'ouverture 13 donnant accès à l'orifice 2 de l'enceinte propre 1. Cet humidimètre électronique permet un contrôle du taux de saturation en humidité beaucoup plus précis qu'un contrôle visuel car l'appréciation du changement de couleur des granulés dessiccants, passage du bleu clair au rose pâle, est assez délicate.

L'utilisation d'un évent shuntant la chicane en combinaison avec un clapet simple effet au refoulement n'est pas impérative mais fortement recommandée afin d'éviter de dégrader la vitesse à la décompression de l'enceinte propre 1 par les pertes de charge de la chicane en cas d'une chute brutale de la pression de l'environnement extérieur. Lorsqu'une telle utilisation est prévue, la valeur de tarage du clapet de refoulement est choisie en fonction de la perte de charge recherchée pour le circuit de refoulement.

De la même manière, l'utilisation d'un clapet simple effet à l'admission en série avec la chicane n'est pas indispensable. En effet, le tarage d'un clapet d'admission donne un moyen simple pour ajuster la perte de charge du circuit d'admission. Mais il existe d'autres moyens pour ajuster la perte de charge du circuit d'admission par exemple le dimensionnement de la chicane surtout lorsqu'elle est convergente car elle présente alors une perte de charge supérieure à celle d'une chicane à section constante. La suppression du clapet d'admission tend à simplifier le dessiccateur, entraîne un gain de coût à la fois en terme de prix de revient mais aussi en terme de coût de maintenance et accroît notablement sa fiabilité.

## Revendications

1. Enceinte à dessiccateur comportant une enceinte propre (1) en communication avec l'environnement extérieur par un orifice (2) équipé d'une antichambre amovible (3) remplie de granulés dessiccants (4), l'enceinte comportant entre l'orifice (2) de l'enceinte propre (1) et l'antichambre amovible (3) remplie de granulés dessiccants (4), une valve (5) fermée au repos et ouverte par la mise en place sur l'orifice (2) de l'enceinte propre (1), de l'antichambre (3) remplie de granulés dessiccants (4) et l'antichambre (3) remplie de granulés dessiccants (4) renfermant une chicane (7, 14) empêchant l'air de suivre un cheminement direct et l'obligeant à rencontrer la majorité des granulés dessiccants (4).

2. Enceinte selon la revendication 1, **caractérisée en ce que** l'antichambre (3) remplie de granulés dessiccants (4) comporte aux deux extrémités de sa chicane (7, 14) des filtres (9, 15, 16) maintenant les granulés dessiccants (4) dans la chicane (7, 14) et évitant la propagation de poussières issues de l'érosion des granulés dessiccants (4).

3. Enceinte selon la revendication 1, **caractérisée en ce que** l'antichambre (3) remplie de granulés dessiccants (4) comporte à l'extrémité de sa chicane (7, 14) tournée vers l'orifice (2) la mettant en communication avec l'enceinte propre (1), un clapet (17) simple effet à l'admission dans l'enceinte propre (1) s'ouvrant en phase de compression du volume intérieur de l'enceinte propre (1).

4. Enceinte selon la revendication 1, **caractérisée en ce que** l'antichambre (3) remplie de granulés dessiccants (4) comporte à l'extrémité de sa chicane (7, 14) tournée vers l'orifice (2) la mettant en communication avec l'enceinte propre (1), un clapet (18) simple effet au refoulement hors de l'enceinte propre (1) s'ouvrant en phase de décompression du volume intérieur de l'enceinte propre (1) et mettant l'enceinte propre (1) directement en communication avec l'environnement extérieur par l'intermédiaire d'un évent (12) en parallèle sur la chicane (7, 14).

5. Enceinte selon la revendication 1, **caractérisée en ce que** la chicane (7, 14) de l'antichambre (3) remplie de granulés dessiccants (4) est convergente avec une section droite allant en se restreignant en direction de l'orifice (2) de l'enceinte propre (1).

6. Enceinte selon la revendication 1, **caractérisée en ce que** l'antichambre (3) remplie de granulés dessiccants (4) renferme une chicane convergente (7, 14) et un clapet (18) simple effet au refoulement hors de l'enceinte propre (1) s'ouvrant en phase de décompression du volume intérieur de l'enceinte propre (1) et mettant l'enceinte propre (1) directement en communication avec l'environnement extérieur par l'intermédiaire d'un évent (12) en parallèle sur la chicane (7, 14).

7. Enceinte selon la revendication 1, **caractérisée en ce que** l'antichambre (3) remplie de granulés dessiccants (4) est pourvue de moyens de contrôle (19, 20) de la saturation en humidité des granulés dessiccants (4).

8. Enceinte selon la revendication 7, **caractérisée en ce que** lesdits moyens de contrôle de la saturation en humidité des granulés dessiccants (4) sont des moyens de contrôle visuel consistant en une fenêtre (19) laissant voir les granulés dessiccants placés à l'extrémité de la chicane (7, 14) tournée vers l'orifice (2) de l'enceinte propre (1).

9. Enceinte selon la revendication 7, **caractérisée en ce que** lesdits moyens de contrôle de la saturation en humidité des granulés dessiccants (4) sont des moyens électroniques de contrôle (20) avec deux électrodes de mesure (22, 23) venant au contact des granulés dessiccants (4) placés à l'extrémité de la chicane (7, 14) tournée vers l'orifice (2) de l'enceinte propre (1).

## Claims

1. Enclosure with desiccator comprising a clean enclosure (1) in communication with the external environment via an orifice (2) equipped with a detachable pre-chamber (3) filled with desiccant granules (4), the enclosure comprising, between the orifice (2) of the clean enclosure (1) and the detachable pre-chamber (3) filled with desiccant granules (4), a valve (5) which is closed at rest and opened by putting the pre-chamber (3) filled with desiccant granules (4) in place on the orifice (2) of the clean enclosure (1), the pre-chamber (3) filled with desiccant granules (4) containing a baffle (7, 14) preventing the air from following a direct path and forcing it to encounter the majority of the desiccant granules (4).

2. Enclosure according to Claim 1, **characterized in that** the pre-chamber (3) filled with desiccant granules (4) comprises, at both ends of its baffle (7, 14), filters (9, 15, 16) keeping the desiccant granules (4) in the baffle (7, 14) and preventing the propagation of dust coming from erosion of the desiccant granules (4).

3. Enclosure according to Claim 1, **characterized in that** the pre-chamber (3) filled with desiccant granules (4) comprises, at the end of its baffle (7, 14) turned towards the orifice (2) putting it in communication with the clean enclosure (1), a single-acting valve (17) for admission into the clean chamber (1) which opens in the compression phase of the internal volume of the clean enclosure (1).

4. Enclosure according to Claim 1, **characterized in that** the pre-chamber (3) filled with desiccant granules (4) comprises, at the end of its baffle (7, 14) turned towards the orifice (2) putting it in communication with the clean chamber (1), a single-acting valve (18) for delivery out of the clean chamber (1), which opens in the decompression phase of the internal volume of the clean enclosure (1), putting the clean enclosure (1) directly in communication with the external environment via a vent (12) in parallel on the baffle (7, 14).

5. Enclosure according to Claim 1, **characterized in that** the baffle (7, 14) of the pre-chamber (3) filled with desiccant granules (4) is convergent with a cross section becoming more restrictive in the direction of the orifice (2) of the clean enclosure (1).

6. Enclosure according to Claim 1, **characterized in that** the pre-chamber (3) filled with desiccant granules (4) contains a convergent baffle (7, 14) and a single-acting valve (18) for delivery out of the clean chamber (1), which opens in the decompression phase of the internal volume of the clean enclosure (1), putting the clean chamber (1) directly in communication with the external environment via a vent (12) in parallel on the baffle (7, 14).

7. Enclosure according to Claim 1, **characterized in that** the pre-chamber (3) filled with desiccant granules (4) is provided with means (19, 20) for controlling the saturation in terms of moisture of the desiccant granules (4).

8. Enclosure according to Claim 7, **characterized in that** the said means for controlling the saturation in terms of moisture of the desiccant granules (4) are visual control means consisting of a window (19) allowing the desiccant granules placed at the end of the baffle (7, 14) turned towards the orifice (2) of the clean chamber (1) to be seen.

9. Enclosure according to Claim 7, **characterized in that** the said means for controlling the saturation in terms of moisture of the desiccant granules (4) are electronic control means (20) with two measuring electrodes (22, 23) coming into contact with the desiccant granules (4) placed at the end of the baffle (7, 14) turned towards the orifice (2) of the clean enclosure (1).

## Patentansprüche

1. Trocknergehäuse mit einem eigentlichen Gehäuse (1) in Verbindung mit der Außenumgebung durch eine Öffnung (2), die mit einer abnehmbaren Vorkammer (3) ausgestattet ist, welche mit Trocknungskörnchen (4) gefüllt ist, wobei das Gehäuse zwischen der Öffnung (2) des eigentlichen Gehäuses (1) und der mit Trocknungskörnchen (4) gefüllten abnehmbaren Vorkammer (3) ein Ventil (5) aufweist, das in der Ruhestellung geschlossen ist und durch das Anbringen der mit Trocknungskörnchen (4) gefüllten Vorkammer (3) an der Öffnung (2) des eigentlichen Gehäuses (1) geöffnet wird, und die mit Trocknungskörnchen (4) gefüllte Vorkammer (3) eine Schikane (7, 14) enthält, die die Luft daran hindert, einem direkten Weg zu folgen, und sie zwingt, auf die Mehrheit der Trocknungskörnchen (4) zu treffen.

2. Gehäuse nach Anspruch 1, **dadurch gekennzeichnet, daß** die mit Trocknungskörnchen (4) gefüllte Vorkammer (3) an den beiden Enden ihrer Schikane (7, 14) Filter (9, 15, 16) aufweist, die die Trocknungskörnchen (4) in der Schikane (7, 14) halten und die Ausbreitung von Staub, der von der Erosion der Trocknungskörnchen (4) stammt, vermeiden.

3. Gehäuse nach Anspruch 1, **dadurch gekennzeichnet, daß** die mit Trocknungskörnchen (4) gefüllte Vorkammer (3) an dem Ende ihrer Schikane (7, 14), das zur Öffnung (2) gerichtet ist, welche sie mit dem eigentlichen Gehäuse (1) in Verbindung bringt, ein einfach wirkendes Ventilelement (17) zum Einlaß in das eigentliche Gehäuse (1) aufweist, welches sich in der Phase der Kompression des Innenvolumens des eigentlichen Gehäuses (1) öffnet.

4. Gehäuse nach Anspruch 1, **dadurch gekennzeichnet, daß** die mit Trocknungskörnchen (4) gefüllte Vorkammer (3) an dem Ende ihrer Schikane (7, 14), das zur Öffnung (2) gerichtet ist, welche sie mit dem eigentlichen Gehäuse (1) in Verbindung bringt, ein einfach wirkendes Ventilelement (18) zum Zurückdrängen aus dem eigentlichen Gehäuse (1) aufweist, welches sich in der Phase der Dekompression des Innenvolumens des eigentlichen Gehäuses (1) öffnet und das eigentliche Gehäuse (1) direkt mit der Außenumgebung mittels einer Lüftungsöffnung (12) parallel zur Schikane (7, 14) in Verbindung bringt.

5. Gehäuse nach Anspruch 1, **dadurch gekennzeichnet, daß** die Schikane (7, 14) der mit Trocknungskörnchen (4) gefüllten Vorkammer (3) konvergent ist, wobei ein vertikaler Querschnitt so verläuft, daß er sich in der Richtung der Öffnung (2) des eigentlichen Gehäuses (1) verengt.

6. Gehäuse nach Anspruch 1, **dadurch gekennzeichnet, daß** die mit Trocknungskörnchen (4) gefüllte Vorkammer (3) eine konvergente Schikane (7, 14) und ein einfach wirkendes Ventilelement (18) zum Zurückdrängen aus dem eigentlichen Gehäuse (1) enthält, welches sich in der Phase der Dekompression des Innenvolumens des eigentlichen Gehäuses (1) öffnet und das eigentliche Gehäuse (1) mit der Außenumgebung mittels einer Lüftungsöffnung (12) parallel zur Schikane (7, 14) direkt in Verbindung bringt.

7. Gehäuse nach Anspruch 1, **dadurch gekennzeichnet, daß** die mit Trocknungskörnchen (4) gefüllte Vorkammer (3) mit Mitteln (19, 20) zur Kontrolle der Feuchtigkeitssättigung der Trocknungskörnchen (4) versehen ist.

8. Gehäuse nach Anspruch 7, **dadurch gekennzeichnet, daß** die Mittel zur Kontrolle der Feuchtigkeitssättigung der Trocknungskörnchen (4) Mittel zur visuellen Kontrolle sind, die aus einem Fenster (19) bestehen, das die Trocknungskörnchen sehen läßt, die an dem Ende der Schikane (7, 14) angeordnet sind, welches zur Öffnung (2) des eigentlichen Gehäuses (1) gerichtet ist.

9. Gehäuse nach Anspruch 7, **dadurch gekennzeichnet, daß** die Mittel zur Kontrolle der Feuchtigkeitssättigung der Trocknungskörnchen (4) elektronische Kontrollmittel (20) mit zwei Meßelektroden (22, 23) sind, die mit den Trocknungskörnchen (4) in Kontakt kommen und an dem Ende der Schikane (7, 14) angeordnet sind, das zur Öffnung (2) des eigentlichen Gehäuses (1) gerichtet ist.
